Europäisches Patentamt

European Patent Office

Office européen des brevets

(19)

(11) Veröffentlichungsnummer: **0 007 025**

**B1**

(12) **EUROPÄISCHE PATENTSCHRIFT**

(21) Anmeldenummer: **79102061.3**

(22) Anmeldetag: **22.06.79**

(51) Int. Cl.³: **G 01 N 1/28, G 01 N 1/20**

(54) **Vorrichtung zum Zubereiten von Lösungen fester Proben für die nasschemische Analyse**

(30) Priorität: **06.07.78 DE 2829690**

(43) Veröffentlichungstag der Anmeldung:
**23.01.80 Patentblatt 80/02**

(45) Bekanntmachung des Hinweises auf die Patenterteilung:
**26.11.80 Patentblatt 80/24**

(84) Benannte Vertragsstaaten:
**BE CH DE FR GB IT NL**

(56) Entgegenhaltungen:
**DE - A - 2 242 056**
**DE - A - 2 257 824**
**DE - A1 - 2 558 377**
**DE - A1 - 2 559 014**

(73) Patentinhaber: **Kali-Chemie Aktiengesellschaft**
**Postfach 220**
**Hans-Böckler-Allee 20**
**D - 3000 Hannover 1 (DE)**

(72) Erfinder: **Hagedorn, Fritz**
**Im Buchenkamp 2**
**D - 3163 Sehnde 6 (DE)**

Courier Press, Leamington Spa, England.

## Vorrichtung zum Zubereiten von Lösungen fester Proben für die naßchemische Analyse

Die Erfindung betrifft eine Vorrichtung zum Zubereiten von Lösungen fester Proben für die naßchemische Analyse, bestehend aus einem Lösegefäß mit zugehörigem Lösungsmittelvorrat und einer Dosiervorrichtung zum Zudosieren der aus einer größeren Charge entnommenen und zu analysierenden Probe an das Lösegefäß.

Im Rahmen der Prozeßüberwachung und -regelung und der Begutachtung von Endprodukten gewinnt die Analytik, speziell die online-Analytik, in vielen Industriebetrieben zunehmend an Bedeutung. Auf dem engeren Gebiet der analytischen Indikation Können die dabei auftretenden Probleme weitgehend mit den zur Verfügung stehenden Analysenmethoden, wie z.B. titrimetrische, fotometrische, konduktometrische, thermometrische Indikation, bewältigt werden. Auch der Automatisierungsgrad derartiger Analysenmethoden ist sehr weit fortgeschritten. Voraussetzung für all diese Analysenmethoden ist das Vorliegen einer Probenlösung, was regelmäßig zu Schwierigkeiten führt, wenn feste Proben analysiert werden sollen. Es ist zwar mit den speziellen Problemen angepaßten, ansonsten jedoch weitgehend marktgängigen Mitteln möglich, aus einer größeren Charge eine in ihrer Zusammensetzung weitgehend repräsentative Probe zu entnehmen. In ihrer Menge ist jedoch eine solche Probe nur grob definiert. Abgesehen von manuellen und dementsprechend zeit- und personal-und damit kostenintensiven Verfahren ist jedoch in der Praxis das Problem weitgehend ungelöst, die Probe oder einen Teil davon exakt abzuwiegen, den gegebenenfalls verbleibenden Rest zu verwerfen und die abgewogene (Teil)Probe quantitativ in ein geeignetes Lösegefäß zu überführen.

Es hat daher nicht an Versuchen gefehlt, dieses Problem auf mechanisierte, automatisierte Weise zu lösen.

Die eingangs beschriebene Vorrichtung ist eine Lösung, wie sie speziell zur Analyse von NPK-Düngern, die als homogenes, gänzlich staubfreies Granulat vorliegen, bekannt ist. Bei dieser programmgesteuerten Vorrichtung wird die vom Probenteiler diskontinuierlich gelieferte, in ihrer Menge nur grob definierte Probe in einen Trichter überführt, aus dem eine Vibrationsrinne in eine um eine liegende Achse um 180° schwenkbare Waagschale einer fotomechanisch gesteuerten Neigungswaage zuteilt. Sobald sich in der Waagschale die vorbestimmte Menge der (Teil)Probe angesammelt hat, wird die Vibrationsrinne weggeschwenkt, die Waagschale um 180° gedreht und dadurch die (Teil)Probe in ein Lösegefäß gekippt, in das zuvor aus einem Lösungsmitteltank mittels einer automatischen Pipette eine vorbestimmte Lösungsmittelmenge vorgelegt worden ist. Die Probe wird darin zum Lösen gebracht, ein Teil der Probenlösung zur eigentlichen Analyse abgezogen, der Rest verworfen und das Lösegefäß gespült, worauf ein neuer Zyklus durchlaufen werden kann. Abgesehen davon, daß diese Vorrichtung nur für absolut staubfreie, nicht zum Anhaften neigende und in der Korngröße weitgehend homogene Proben geeignet ist, ist es kompliziert im Aufbau, in der Steuerung und im Steuerprogramm und dementsprechend störanfällig.

Der Erfindung liegt daher die Aufgabe zugrunde, die eingangs beschriebene Vorrichtung zu verbessern, insbesondere ihren Einsatzbereich auch auf staubende und/oder zum Anbacken neigende Proben unterschiedlichen Kornspektrums zu erweitern, eine Vielzahl von Programmschritten zu vermeiden und die Störanfälligkeit zu verringern.

Die Lösung gelingt erfindungsgemäß dadurch, daß die Dosiervorrichtung aus einer die Probe dem Lösegefäß kontinuierlich zudosierenden Dosierbandwaage und das Lösegefäß aus einem von einem konstanten Lösungsmittelstrom durchflossenen Überlaufgefäß besteht.

Die Dosierbandwaage dosiert die diskontinuierlich vom Probenteiler angelieferte Probe kontinuierlich in einem konstanten Strom in das Überlaufgefäß, das seinerseits von einem konstanten Lösungsmittelstrom durchflossen wird und aus dem kontinuierlich oder zu jedem beliebigen Zeitpunkt diskontinuierlich eine Lösung mit definiertem Probengehalt entnommen und der Analyse zugeführt werden kann. Proben, insbesondere mit zum Anhaften neigendem Feinkornanteil, lassen sich mit Hilfe einer Rakel quantitativ vom Förderband der Dosierbandwaage abstreifen und in das Überlaufgefäß überführen. Die Dosierbandwaage kann daher ohne besondere Schwierigkeiten Proben unterschiedlichen Kornspektrums verarbeiten. Infolge der bei einer Dosierbandwaage im Gegensatz zu der bekannten Neigungswaage nur wenige Millimeter betragenden Fallhöhe des zu dosierenden Guts kann praktisch keine Staubentwicklung auftreten. Der konstante Lösungsmittelstrom im Überlaufgefäß kann im einfachsten Fall, falls das Lösungsmittel Wasser is und das öffentliche Netz hinreichend konstanten Druck aufweist, durch Anschluß an die öffentliche Wasserleitung und durch Zwischenschaltung eines Drosselventils verwirklicht werden. Falls diese Bedingungen nicht gegeben sind, genügt ein entsprechend hoch über dem Überlaufgefäß angeordneter Vorratstank, in dem der Lösungsmittelstand durch geeignete Maßnahmen, z.B. ständigen Zulauf mit Überlauf, konstant gehalten wird und der mittels einer Leitung mit Drosselventil mit dem Überlaufgefäß verbunden ist.

Als Dosierbandwaage wird zweckmäßigerweise eine zuteilungsgeregelte Dosierbandwaage benutzt. Eine derartige Dosierbandwaage mit Vibrationsrinne als Zuteilungsorgan ist mitsamt ihrer Regelung marktgängig. Der Vibrationsrinne wird vorteilhafterweise ein Trichter mit Überlauf vorgeordnet. Der Trichter dient als Zwischenlager für die diskontinuierlich vom Probenteiler angelieferte Probe. Die Vibrationsrinne zieht die Probe aus dem Trichter ab und teilt sie dem Dossierband zu. Das durch den Überlauf definierte Volumen des Trichters ist zweckmäßig geringfügig größer als die von der Vibrationsrinne in der Zeit zwischen den Probenlieferungen abgezogene Probenmenge, damit kein Diskontinuum in der Förderung der Dosierbandwaage eintreten kann.

Um sicherzustellen, daß sich die lösbaren Bestandteile der Probe im Überlaufgefäß vollständig lösen und mit dem Lösungsmittel vermischen, ist das Überlaufgefäß in wenigstens zwei Kammern geteilt. Die Dosierbandwaage fördert dabei in die stromauf gelegene Kammer, während die Probenlösung aus der stromab gelegenen Kammer, beispielsweise mittels automatischen Pipetten, Dosierpumpen od.dgl., vorzugsweise nahe dem Überlauf, entnommen wird. Zweckmäßig wird das Lösen und Mischen in den Kammern durch geeignete Mittel wie Rührer, Umlenk- oder Überlaufwehre gefördert.

Falls die Probe unlösliche Bestandteile enthält, kann durch entsprechende Gestaltung der Strömungsquerschnitte innerhalb der Kammern in Verbindung mit einer entsprechenden Strömung sichergestellt werden, daß die unlöslichen Bestandteile mitgeschwemmt werden. Die unlöslichen Bestandteile können vor der Analyse aus der entnommenen Probenlösung mittels an sich bekannter kontinuierlicher Filter ausgefiltert werden.

Falls anstelle von Wasser z.B. verdünnte, wässrige Säuren als Lösungsmittel benutzt werden, weist das Überlaufgefäß zweckmäßig noch eine dritte Kammer auf, wobei in die in Strömungsrichtung erste Kammer konzentrierte Säure und erst in die zweiten Kammer die Probe dosiert wird. Die Probenlösung wird dann wie im Regelfall der letzten Kammer entnommen.

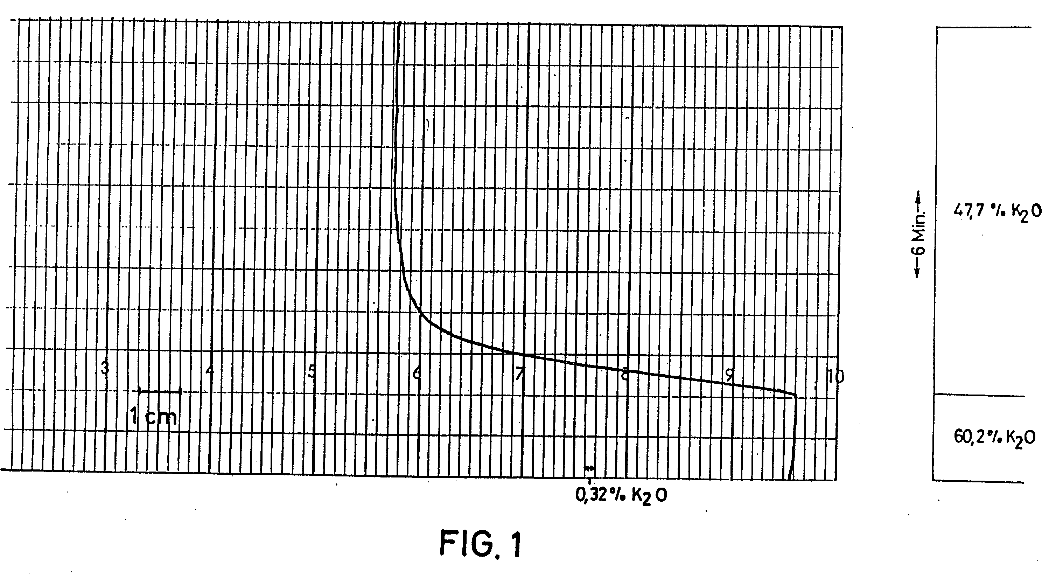

Die Brauchbarkeit der erfindungsgemäßen Vorrichtung ist durch Bestimmung des $K_2O$-Gehaltes in Kali-Düngesalzen bekannten $K_2O$-Gehalts mittels thermometrischer Indikation im kontinuierlichen Durchflußverfahren getestet worden. Das Schreiberdiagramm der Fig. 1 zeigt die aufeinanderfolgende Analyse zweier Kali-Düngesalze unterschiedlichen $K_2O$-Gehalts, nämlich von 47,7% $K_2O$ und 60,2% $K_2O$. Ein Teilstrich der Diagrammskala entspricht einem $K_2O$-Gehalt von 0,32%. Der Papiervorschub war auf 20 cm/h eingestellt.

Die Genauigkeit der Analysenergebnisse war bei einem Gehalt von ca. 60% $K_2O$ bei 95%iger statistischer Sicherheit allgemein besser als ±0,2% $K_2O$ absolut. Im Fall der Analyse Gemäß dem Schreiberdiagramm der Fig. 1 betrug der Fehler ±0,1% $K_2O$ absolut.

Orientierende Versuche mit anderen Proben und anderer Indikation lassen Ergebnisse mit Abweichungen ähnlicher Größeordnung erwarten.

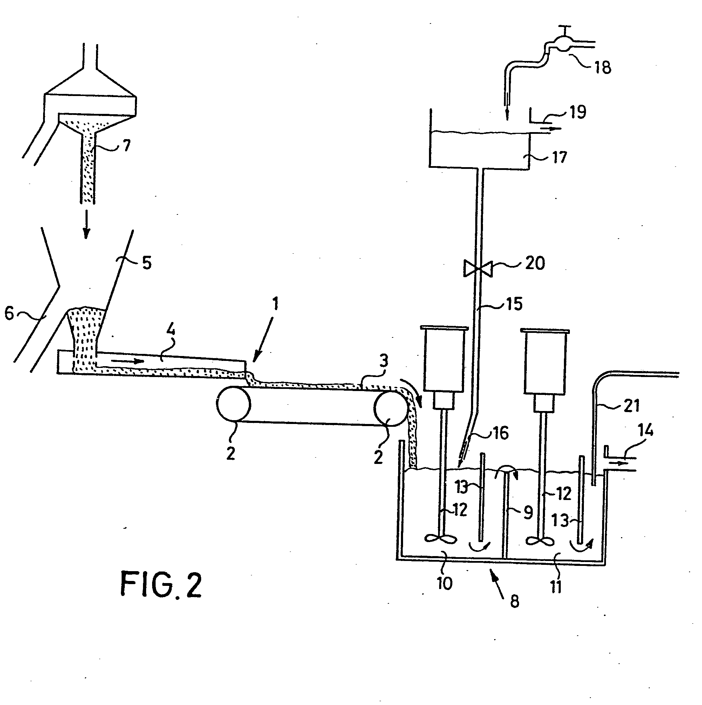

Ein Ausführungsbeispiel der erfindungsgemäßen Vorrichtung ist in Fig. 2 schematisch im Aufriß dargestellt.

In der Zeichnung ist eine insgesamt mit 1 bezeichnete Dosierbandwaage zu erkennen, die im wesentlichen aus einem um Umlenkrollen 2 umlaufenden Förderband 3, einer Vibrationsrinne 4 und nicht dargestellten Antriebs-, Wäge- und Regeleinrichtungen besteht. Eine derartige zuteilungsgeregelte Dosierbandwaage ist marktgängig (z.B. Kleinst-Dosierbandwaage EDB der Firma Hans Boekels GmbH & Co., Aachen). Die Umlaufgeschwindigkeit des Förderbandes 3 ist einstellbar, wird jedoch während des Betriebs konstant gehalten. Die Regelung erfolgt über die Schwingungsamplitude der Vibrationsrinne 4.

Über dem Aufgabeende der Vibrationsrinne 4 ist ein Trichter 5 mit Überlauf 6 angeordnet. Er dient als Zwischenlager für die bei 7 von einem konventionellen Probenteiler diskontinuierlich angelieppferte Probe.

Unterhalb des Abgabeendes des Förderbandes 3 ist ein insgesamt mit 8 bezeichnetes Löse- bzw. Überlaufgefäß angeordnet. Das Überlaufgefäß ist mittels eines Überlaufwehres 9 in zwei Kammern 10 und 11 geteilt. Jede Kammer 10, 11 ist mit einem Rührer 12 und diesem in Strömungsrichtung nachgeordnet mit einem Umlenkwehr 13 ausgestattet. Die Umlenkwehre 13 tauchen bis knapp zum Boden des Überlaufgefäßes und reichen bis über die Lösungsmitteloberfläße, die durch einem ins Freie führenden Überlauf 14 bestimmt wird. Das Überlaufwehr 9 weist zweckmäßig die gleiche Höhe wie der Überlauf 14 auf. Durch entsprechende Gestaltung der Strömungswege in Verbindung mit der Strömungsgeschwindigkeit kann sichergestellt werden, daß etwa unlösliche Bestandteile der Probe vom Lösungsmittelstrom mitgeschwemmt werden.

Das Überlaufgefäß 8 steht über eine Leitung 15, die bei 16 in die stromauf gelegene Kammer 10 des Überlaufgefäßes 8 mündet, mit einem Lösungsmitteltank 17 in Verbindung. Durch ständigen Zulauf des Lösungsmittels bei 18, beispielsweise aus der öffentlichen Wasserleitung, und einen Überlauf 19 ist dafür Sorge getragen, daß das Lösungsmittel im Tank 17 ständig auf konstanter Höhe steht. Der zum Überlaufgefäß 8 fließende Lösungsmittelstrom kann durch ein Regelventil 20 in der Leitung 15 reguliert werden.

Lösungsmittel, Probe und Probenlösung nehmen den durch die Pfeile genennzeichneten Weg. Nahe dem Überlauf 14 des Überlaufgefäßes 8 kann bei 21 die Probenlösung, beispielsweise mittels nicht dargestellter automatischer Pipetten, Dosierpumpen od.dgl., entnommen werden. Im Falle, daß die Probe unlösliche Bestandteile enthält, kann die bei 21 entnommene Probenlösung vor der Analyse über ein an sich bekanntes, nicht dargestelltes, kontinuierliches Filter geleitet werden.

Die Arbeitsweise der Vorrichtung ist folgende: Nach Öffnen des Lösungsmittelzulaufs 18 läßt man das Überlaufgefäß 8 sich mit Lösungsmittel füllen und reguliert den Lösungsmittelstrom bei 20 auf einen vorbestimmten Wert. Danach oder mehr oder weniger gleichzeitig nimmt man die Rührer 12 und die Dosierbandwaage 1 in Betrieb und reguliert deren Förderleistung auf einen vorbestimmten Wert. Nachdem die Vorrichtung so betriebsbereit ist, kann durch den nicht dargestellten Probenteiler bei 7 die erste Probe angeliefert werden. Bei ständiger Überwachung, beispielsweise zur Regelung von Produktionsprozessen, ist die angelieferte Probe zweckmäßig etwas größer als die Förderleistung der Dosierbandwaage, damit kein Diskontinuum in der Probenlösung auftritt.

Nach einer kurzen einschwingphase nach Beginn der Dosierung der Probe in das Überlaufgefäß kann dann die Probenlösung bei 21 zur Analyse entnommen werden.

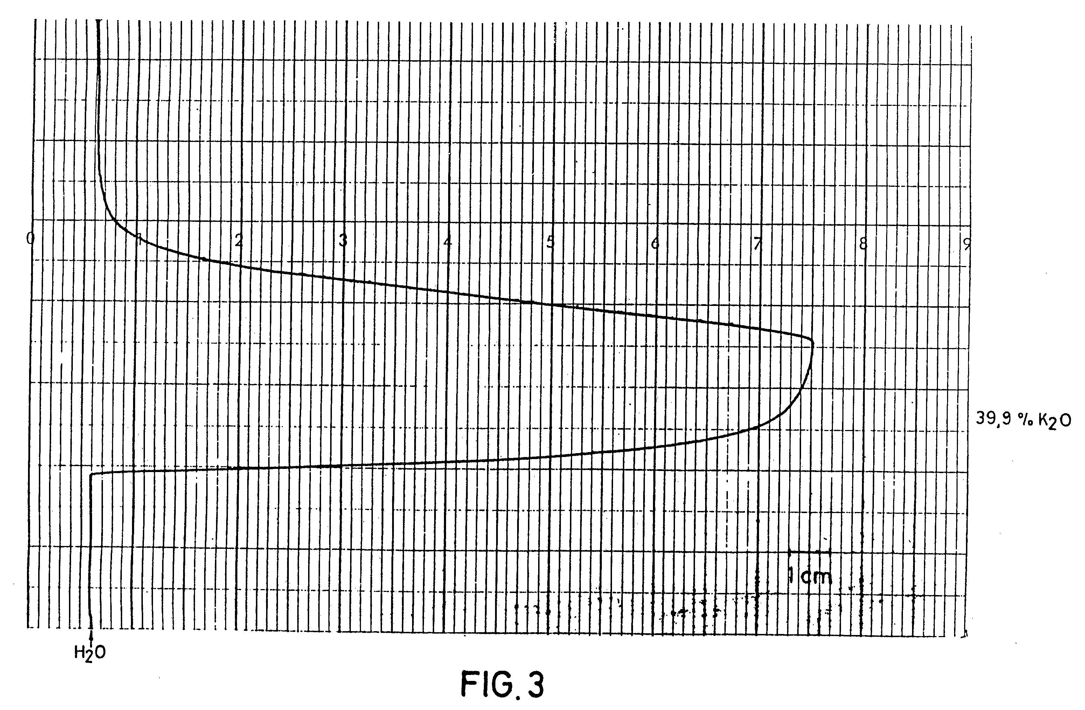

Wenn nur gelegentliche Analysen genommen werden sollen, genügt die Anlieferung von einzelnen Proben in entsprechenden Zeitabständen. Bei kontinuierlicher Durchflußanalyse resultiert dann ein Schreiberdiagramm gemäß Fig. 3.

Bei der obenerwähnten $K_2O$-Bestimmung in Kali-Düngesalzen, die zur Regelung von deren Reinigungs-Flotation gedacht war, lieferte der Probenteiler alle fünf Minuten etwa 600 g Salz. Das durch den Überlauf 6 am Trichter 5 bestimmte Fassungsvermögen des Trichters 5 war auf etwa 550 g eingestellt. Die Förderleistung der Dosierbandwaage war auf 100,0 g Salz/min einreguliert, so daß im Minimum 50 g Salz als Vorrat im Trichter verblieben. Von jeder nachfolgenden Probe werden also etwa 100 g Salz über den Überlauf 6 verworfen. Die Durchflußgeschwindigkeit am Überlaufgefäß 8 war auf 500,0 ml/min einreguliert, so daß die Probenlösung eine Konzentration von 0,2 g Probe/ml aufwies.

## Patentansprüche

1. Vorrichtung zum Zubereiten von Lösungen fester Proben für die naßchemische Analyse, bestehend aus einem Lösegefäß (8) mit zugehörigem Lösungsmittelvorrat und einer Dosiervorrichtung zum Zudosieren der aus einer größeren Charge entnommenen und zu analysierenden Probe an das Lösegefäß (8), dadurch gekennzeichnet, daß die Dosiervorrichtung aus einer die Probe dem Lösegefäß (8) kontinuierlich zudosierenden Dosierbandwaage (1) und das Lösegefäß (8) aus einem von einem konstanten Lösungsmittelstrom durchflossenen Überlaufgefäß (8) besteht.

2. Vorrichtung nach Anspruch 1, dadurch gekennzeichnet, daß die Dosierbandwaage (1) eine zuteilungsgeregelte Dosierbandwaage (1) ist.

3. Vorrichtung nach Anspruch 2, dadurch gekennzeichnet, daß die Dosierbandwaage (1) eine Vibrationsrinne (4) als Zuteilungsorgan und dieser vorgeordnet einen Trichter (5) mit Überlauf (6) aufweist.

4. Vorrichtung nach einem der Ansprüche 1 bis 3, dadurch gekennzeichnet, daß Überlaufgefäß (8) wenigstens zwei Kammern (10, 11) aufweist, von denen jede mit löse- und mischungsfördernden Mitteln (12, 13) ausgestattet ist.

5. Vorrichtung nach Anspruch 4, dadurch gekennzeichnet, daß die löse- und mischungsfördernden Mittel aus Rührern (12) und/oder Umlenk- oder Überlaufwehren (13) bestehen.

## Claims

1. Apparatus for preparing solutions of solid samples for wet chemical analysis, comprising a dissolution vessel (8) with an appertaining solvent supply and a metering apparatus for metering to the dissolution vessel (8) the sample to be analysed, which is taken from a larger charge, characterised in that the metering apparatus comprises a metering belt-type weigher (1) to continuously meter the sample to the dissolution vessel (8) and that the dissolution vessel (8) comprises an overflow vessel (8) flowed through by a constant stream of solvent.

2. Apparatus according to Claim 1, characterised in that the metering belt-type weigher (1) is a delivery-regulated metering belt-type weigher (1).

3. Apparatus according to Claim 2, characterised in that the metering belt-type weigher (1) has a vibratory chute (4) as a delivery member, preceded by a hopper (5) with overflow (6).

4. Apparatus according to one of Claims 1 to 3, characterised in that the overflow vessel (8) has at least two chambers (10, 11), each of which is equipped with means (12, 13) for assisting dissolution and mixing.

5. Apparatus according to Claim 4, characterised in that the means for assisting dissolution and mixing comprise stirrers (12) and/or direction-changing weirs or overflow weirs (13).

## Revendications

1. Dispositif pour la préparation de solutions d'échantillons solides pour l'analyse chimique par voie humide, constitué d'une cuve de dissolution (8) avec un réservoir de solvant approprié et d'un dispositif de dosage pour le dosage dans la cuve de dissolution (8) de l'échantillon prélevé dans une charge plus importante et à analyser, caractérisé en ce que le dispositif de dosage est constitué d'une balance à bande de dosage (1) dosant en continu l'échantillon dans la cuve de dissolution (8), et que la cuve de dissolution (8) est constituée d'une cuve à trop-plein (8) traversée par un courant de solvant constant.

2. Dispositif selon la revendication 1, caractérisé en ce que la balance à bande de dosage (1) est à distribution réglée.

3. Dispositif selon la revendication 2, caractérisé en ce que la balance à bande de dosage (1) comporte une goulotte à vibrations (4) comme organe de distribution et que cette dernière est équipée d'un entonnoir (5) avec trop-plein (6).

4. Dispositif selon l'une quelconque des revendications 1 à 3, caractérisé en ce que la cuve à trop-plein (8) comporte au moins deux chambres (10, 11) dont chacune est équipée de moyens activant la dissolution et le mélange (12, 13).

5. Dispositif selon la revendications 4, caractérisé en ce que les moyens d'activation de la dissolution et du mélange sont des agitateurs (12) et/ou des vannes de renvoi ou des déversoirs de surface (13).

FIG. 1

FIG.2

FIG. 3

39,9 % K₂O

0 007 025